# EUROPÄISCHE PATENTSCHRIFT

(11) **EP 3 863 895 B1**
(45) Veröffentlichungstag und Bekanntmachung des Hinweises auf die Patenterteilung: **07.09.2022**
(21) Anmeldenummer: 19783255.3
(22) Anmeldetag: 01.10.2019
(51) Int. Cl.: B60S 1/32

(54) **ANBAUTEIL FÜR EINEN WISCHERARM**
ATTACHMENT FOR A WIPER ARM
ÉLÉMENT RAPPORTÉ POUR UN BRAS D'ESSUIE-GLACE

(30) Priorität: 08.10.2018 DE 102018007917
(43) Veröffentlichungstag der Anmeldung: 18.08.2021
(73) Patentinhaber: A. Raymond et Cie, 38000 Grenoble (FR); Audi AG, 85045 Ingolstadt (DE)
(72) Erfinder: BODE, Karl, 79540 Lörrach (DE); HÄFNER, Stephan, 95473 Prebitz (DE); FEGER, Axel, 79540 Lörrach (DE)
(74) Vertreter: König Szynka Tilmann von Renesse Patentanwälte Partnerschaft mbB Düsseldorf
(86) Internationale Anmeldenummer: PCT/EP2019/076564
(87) Internationale Veröffentlichungsnummer: WO 2020/074317

(56) Entgegenhaltungen:
- US-A- 4 782 547
- US-A1- 2016 368 460
- US-A1- 2018 194 329

## Beschreibung

Die Erfindung betrifft ein Anbauteil für einen Wischerarm nach dem Oberbegriff von Anspruch 1. Die US 2018/194329 A1, US 2016/368460 A1 und US 4 782 547 A offenbaren gattungsgemäße Anbauteile.

Gattungsgemäße Anbauteile aus dem Stand der Technik sind zumeist entweder formstabil oder flexibel ausgebildet. Formstabile Anbauteile haben den Nachteil, dass sie sich nicht an die Form des Stangenarms anpassen können. Insbesondere ist dies bei Anbauteilen problematisch, die über den Stangenarm geschoben werden. Weist der Stangenarm wie in vielen Fällen eine winkelige oder gebogene Form auf, lässt sich das Anbauteil nicht über die gesamte Länge des Stangenarms einschieben. Flexible Anbauteile hingegen haben den Nachteil, dass sie Formänderungen unterliegen können, die dazu führen können, dass wichtige Funktionen des Scheibenwischers beeinträchtigt werden. So kann sich zum Beispiel die Ausrichtung von Fluidaustritten verändern oder es kann sich die Position von Kanalanschlussstellen verschieben. Aufgabe der Erfindung ist es daher, ein gattungsgemäßes Anbauteil vorzuschlagen, das sich besser an die Form verschiedener Stangenarme anpassen kann und zugleich eine sichere Positionierung erlaubt.

Die Aufgabe wird gemäß dem Gegenstand von Anspruch 1 und den nebengeordneten Ansprüchen gelöst. Vorteilhafte Ausführungsformen sind Gegenstand der Unteransprüche des Anspruchs 1 und der nebengeordneten Ansprüche, soweit diese Unteransprüche aufweisen. Vorteilhafte Ausführungsformen sind auch Gegenstand der hiernach folgenden Beschreibung.

Die Erfindung geht von dem Grundgedanken aus, ein Anbauteil mit einem ersten formstabilen Element, einem zweiten formstabilen Element und einem flexiblen Element zu verwenden. Dabei können die formstabilen Elemente die Teile des Anbauteils bilden, die insbesondere für eine sichere Positionierung sorgen. Das flexible Element, das die formstabilen Elemente zumindest abschnittsweise überdeckt, ist insbesondere geeignet, durch seine Flexibilität sich der Form der formstabilen Elemente und des Stangenarms anzupassen. Dabei kann das flexible Element Stellen an Stangenarmen überdecken, die von gewöhnlichen Anbauteilen nicht überdeckt werden können, insbesondere wenn die Stangenarme eine winkelige oder gebogene Form aufweisen. Zudem bildet das flexible Element durch die Überdeckung zumindest einen Teil der Außenfläche des Anbauteils. Die Fläche kann dabei derart ausgebildet sein, dass insbesondere aerodynamischen, aber auch ästhetischen Anforderungen Rechnung getragen werden kann.

Das Anbauteil weist einen Fluidkanal auf. Unter dem Begriff "Fluidkanal" ist im Sinne der Erfindung der Fluidkanal, den das Anbauteil aufweist, zu verstehen. Der Fluidkanal dient dazu, Fluid durch das Anbauteil zu leiten. Insbesondere wird dabei das Fluid einer Düse, mittels der Fluid auf eine Scheibe eines Fahrzeugs gesprüht werden kann, zugeführt. Insbesondere durchströmt dabei das Fluid den gesamten Fluidkanal des Anbauteils. Als Fluid kommen insbesondere Flüssigkeiten, die zum Reinigen einer Fahrzeugscheibe eingesetzt werden können, in Betracht.

Unter dem Begriff "Fluidkanalabschnitt" ist im Sinne der Erfindung ein Abschnitt des Fluidkanals, den das Anbauteil aufweist, zu verstehen. Das gilt für den Fluidabschnittabschnitt, der in dem ersten formstabilen Element ausgebildet ist (erster Fluidkanalabschnitt), den Fluidkanalabschnitt, der in dem zweiten formstabilen Element ausgebildet ist (zweiter Fluidkanalabschnitt) und den Fluidkanalabschnitt, der in dem flexiblen Element ausgebildet ist (dritter Fluidkanalabschnitt). Vorzugsweise sind der erste Fluidkanalabschnitt und der Verbindungsabschnitt des ersten formstabilen Elements einteilig ausgebildet. Beispielsweise können sie durch Spritzguss einteilig hergestellt werden. Insbesondere bevorzugt weist der erste Fluidkanalabschnitt eine feste Position in Bezug auf den Verbindungsabschnitt des ersten formstabilen Elements auf. Dadurch weisen Teile des Fluidkanalabschnitts wie zum Beispiel Fluidaustritte eine konstante Ausrichtung zum Verbindungsabschnitt auf. Vorzugsweise sind der zweite Fluidkanalabschnitt und der Verbindungsabschnitt des zweiten formstabilen Elements einteilig ausgebildet. Beispielsweise können sie durch Spritzguss einteilig hergestellt werden. Insbesondere bevorzugt weist der zweite Fluidkanalabschnitt eine feste Position in Bezug auf den Verbindungsabschnitt des zweiten formstabilen Elements auf. Dadurch weisen Teile des Fluidkanalabschnitts wie zum Beispiel Fluidaustritte eine konstante Ausrichtung zum Verbindungsabschnitt auf.

Vorzugsweise besteht der Fluidkanal ausschließlich aus dem ersten, zweiten und dritten Fluidkanalabschnitt. Es ist alternativ denkbar, dass der Fluidkanal auch andere Abschnitte aufweist. Andere Abschnitte können zum Beispiel Segmente sein, die eine Fluidverbindung zwischen den Fluidkanalabschnitten bereitstellen. Ein Beispiel für ein Segment ist ein Schlauch oder ein Rohr. Ein Fluidkanalabschnitt kann mittelbar oder unmittelbar mit einem anderen Fluidkanalabschnitt verbunden sein. Als mittelbare Verbindung ist in diesem Kontext bloß eine Fluidverbindung zu verstehen. Als unmittelbare Verbindung ist in diesem Kontext zu verstehen, dass ein Fluidkanalabschnitt an einen anderer Fluidkanalabschnitt angrenzt und Fluid in Strömungsrichtung von dem einen Fluidkanalabschnitt unmittelbar in den anderen Fluidkanalabschnitt strömen kann.

Ausführungen in der Beschreibung, die sich allgemein auf "Element" beziehen, betreffen zugleich das erste formstabile Element, das zweite formstabile Element und das flexible Element. Dies gilt nicht, wenn ausdrücklich Bezug auf ein bestimmtes Element genommen wird (z. B. flexibles Elements). Ausführungen in der Beschreibung, die sich allgemein auf "formstabiles Element" beziehen, betreffen zugleich das erste formstabile Element und das zweite formstabile Element. Dies gilt nicht, wenn ausdrücklich Bezug auf ein bestimmtes formstabiles Element genommen wird (z. B. erstes formstabiles Elements).

Das formstabile Element erfährt im Wesentlichen keine Formänderung, wenn auf das formstabile Element Kräfte wirken, die üblicherweise auf Wischerarmen wirken, wenn Wischerarme genutzt werden. Hierbei handelt es sich beispielsweise um Kräfte, die durch den Fahrtwind entstehen. Ein anderes Beispiel sind Kräfte, die sich durch das in den Fluidkanalabschnitten strömende Fluid ergeben. Es ist allerdings die Formänderung nicht zu berücksichtigen, die bei der Montage bestimmungsgemäß erfolgt. Eine bestimmungsgemäße Formänderung erfolgt beispielsweise, wenn ein Teil der Aufnahme des Verbindungsabschnitts des formstabilen Elements abgenommen oder aufgeklappt wird, um den Stangenarm einzuführen (siehe unten).

Die Formstabilität bewirkt, dass das formstabile Element seine Lage in Bezug auf den Stangenarm im Vergleich zu einem flexiblen Element zuverlässiger beibehält. Die Formstabilität bewirkt ferner, dass das erste formstabile Element seine Lage in Bezug auf das zweite formstabile Element zuverlässiger beibehält. Die Formstabilität bewirkt des Weiteren, dass das erste formstabile Element seine Lage in Bezug auf das elastische Element zuverlässiger beibehält. Die Formstabilität bewirkt außerdem, dass das erste formstabile Element seine Lage in Bezug auf Anschlusskomponenten wie einen Düsenträger mit einer Düse zuverlässiger beibehält. Die Formstabilität bewirkt auch, dass die Gefahr ungewollter Veränderungen der Form des formstabilen Elements verringert wird. Die Formstabilität verhindert, dass bei der Bearbeitung des formstabilen Elements das formstabile Element nicht ungewollt die Form ändert. Beispiele für eine Bearbeitung sind das Einbringen von Bohrungen oder Gewinden in das formstabile Element.

Die Formstabilität erhöht somit die Zuverlässigkeit der Funktion des Scheibenwischers. Beispielsweise werden Leckagen vermieden, weil Fluidkanalabschnitte, die in Fluidströmungsrichtung unmittelbar aufeinander folgen, zueinander nicht verschoben werden. Die gewünschte Sprührichtung des Fluids wird beibehalten, da die Ausrichtung von Fluidaustrittsstellen nicht verändert wird. Der Druck des Fluidstrahls, der auf eine Scheibe aufzutreffen bestimmt ist, wird nicht durch Deformationen des Fluidkanalabschnitts des formstabilen Elements beeinträchtigt. Das Ausbleiben einer Nachgiebigkeit führt zu einer erhöhten Fertigungsgenauigkeit. Engere Toleranzbereiche können dadurch eingehalten werden. Insbesondere verbessert dies die Funktion von Fluidaustritten und Düsenelementen, die in oder an dem formstabilen Element eingebracht sind.

Die Flexibilität hingegen bewirkt, dass sich das flexible Element der Form des Stangenarms anpassen kann. Es kann sich auch der Form des formstabilen Elements anpassen. Insbesondere ist das flexible Element biegsam und elastisch. Vorzugsweise ist es im Wesentlichen schlauchförmig und gummischlauchartig und kann sich insbesondere in Querrichtung ausdehnen, wenn es über einen Gegenstand gestülpt wird, der einen größeren Querschnitt aufweist als der Querschnitt des flexiblen Elements selbst.

Das flexible Element bildet zumindest einen Teil der Außenfläche des Anbauteils. In einer bevorzugten Ausführungsform, bei der das flexible Element vollständig das formstabile Element überdeckt, bildet das flexible Element die gesamte Außenfläche des Anbauteils. Da das Anbauteil mit dem Stangenarm derart verbunden ist, dass der Stangenarm in einer Aufnahme des Anbauteils untergebracht ist, bildet das flexible Element somit auch zumindest teilweise die Außenfläche für diese Verbindung.

Technische Anforderungen, die die Außenfläche eines bekannten Stangenarmes und die Außenfläche von an diesem Stangenarm angebrachten Bauteilen wie zum Beispiel Düseneinheiten, Schläuchen oder Rohren zu erfüllen haben, müssen nach der Lehre der Erfindung lediglich von der Außenfläche des flexiblen Elements erfüllen werden. Die technischen Anforderungen sind somit lediglich an ein einzelnes Teil zu stellen. Zu den technischen Anforderungen, die die Außenfläche des flexiblen Elements zu erfüllen hat, zählen insbesondere aerodynamische Anforderungen. Das flexible Element kann vorzugsweise derart geformt sein, dass durch ihre Außenfläche der Fahrtwind abgewiesen werden kann. Vorzugsweise kann das flexible Element derart geformt sein, dass der Fahrtwind ausgenutzt werden kann, um eine Anpresskraft auf den Stangenarm und somit auf das Wischerblatt zu erzeugen. Dadurch liegt das Wischerblatt auch bei hohen Fahrtgeschwindigkeiten zuverlässig an der Scheibe des Fahrzeugs an, so dass eine hohe Wischqualität gewährleistet werden kann. Da das flexible Element die Außenfläche des Anbauteils bildet, kann es auch derart geformt sein, dass es eine ästhetische Wirkung erzielt. Da das Anbauteil nach der erfindungsgemäßen Lehre nicht aus einem Stück hergestellt ist, kann das flexible Element durch ein anderes flexibles Element ausgetauscht werden. Austauschbedarf kann beispielsweise bestehen, wenn ein flexibles Element beschädigt ist oder wenn sich die technischen oder ästhetischen Anforderungen an das flexible Element geändert haben. Diese Austauschmöglichkeit ist eine ressourcenschonende Alternative zum Austausch des gesamten Stangenarms. Die Überdeckung des formstabilen Elements durch das flexible Element kann ferner den Vorteil haben, dass das formstabile Element sicherer mit dem Stangenarm verbunden ist. Dies ist insbesondere der Fall, wenn das flexible Element bei Überdeckung des formstabilen Elements in der Weise einer Presspassung mit dem formstabilen Element verbunden ist.

Vorzugsweise überdeckt das flexible Element das erste formstabile Element nicht nur abschnittweise, sondern vollständig. Ferner oder alternativ hierzu überdeckt dabei das flexible Element das zweite formstabile Element nicht nur abschnittweise, sondern vollständig. Insbesondere bevorzugt überdeckt das flexible Element das erste formstabile Element bis auf einen Teil des ersten Fluidkanalabschnitts und/oder eines Anschlusses des ersten flexiblen Elements vollständig.

Ausführungen in der Beschreibung, die sich allgemein auf "Verbindungsabschnitt" beziehen, betreffen zugleich den Verbindungsabschnitt des formstabilen Elements, den Verbindungsabschnitt des flexiblen Elements und den Verbindungsabschnitt des Trägers. Dies gilt nicht, wenn ausdrücklich Bezug auf einen Verbindungsabschnitt eines bestimmten Elements oder des Trägers genommen wird (z. B. Verbindungsabschnitt des flexiblen Elements). Entsprechendes gilt für die Bestandteile des Verbindungsabschnitts (Aufnahme und Öffnung).

Der Verbindungsabschnitt dient zum Verbinden des Elements oder des Trägers mit dem Stangenarm. Die Verbindung kann kraftschlüssig, formschlüssig oder stoffschlüssig erfolgen. Eine Verbindung kann auch durch Kombination aus zwei oder drei dieser Wirkprinzipien erfolgen. Vorzugsweise ist die Verbindung ohne Zerstörung oder Beeinträchtigung der Funktion des Verbindungsabschnitts und des Stangenarms lösbar (lösbare Verbindung). Dadurch wird eine Wiederverwendung ermöglicht. Vorzugsweise wird die Verbindung hergestellt, indem die Aufnahme den Stangenarm oder einen Teil von dem Stangenarm umhüllt oder umklammert.

Die Verbindung des flexiblen Elements mit dem Stangenarm kann durch teilweise unmittelbaren Kontakt zwischen der Aufnahme des Verbindungsabschnitts des flexiblen Elements hergestellt werden. Insbesondere erfolgt die Verbindung des flexiblen Elements mit dem Stangenarm zumindest abschnittsweise mittelbaren, indem sich zwischen dem Stangenarm und der Aufnahme des Verbindungsabschnitts des flexiblen Elements das formstabile Element befindet.

Der Verbindungsabschnitt weist eine Aufnahme mit einer Öffnung, durch die der Stangenarm in die Aufnahme eingeführt werden kann, auf. Die Aufnahme dient dazu, den Stangenarm oder einen Teil des Stangenarms in die Aufnahme unterzubringen. In einer bevorzugten Ausführungsform ist die Aufnahme rohrförmig. Besonders bevorzugt ist das Profil der rohrförmigen Aufnahme geschlossen. Beispielsweise ist dieses Profil im Wesentlichen kreisförmig oder rechteckig. Alternativ ist das Profil der rohrförmigen Aufnahme offen. Beispielsweise ist dieses Profil im Wesentlichen U-förmig oder V-förmig. Eine Aufnahme mit im Wesentlichen U-förmigem oder V-förmigem Profil kann den Stangenarm verbinden, indem die Wände der Aufnahme den Stangenarm umklammern.

Die Öffnung dient dazu, dass der Stangenarm durch sie in die Aufnahme eingeführt werden kann. Unter dem Begriff "Öffnung" ist im Sinne der Erfindung eine Stelle zu verstehen, die geeignet ist, einen Stangenarm derart in die Aufnahme zu führen, dass der Stangenarm in der Aufnahme untergebracht werden kann. In einer Ausführungsform kann die Aufnahme mehrere Öffnungen aufweisen. Dies erlaubt eine flexiblere Montage.

Bei einer rohrförmigen Aufnahme ist die Öffnung an einem Ende des Rohres angebracht. Ein Stangenarm kann dabei entlang der Richtung der Längsachse des Rohrs in die Aufnahme eingeführt werden. Bei einer rohrförmigen Aufnahme, deren Profil offen ist, ist die Öffnung vorzugsweise die durch die Öffnung des Profils bedingte seitliche Öffnung der rohrförmigen Aufnahme. Ein Stangenarm kann dabei seitlich in die rohrförmige Aufnahme eingeführt werden. In einer Ausführungsform bietet auch eine rohrförmige Aufnahme mit geschlossenem Profil die Möglichkeit, eine seitliche Öffnung bereitzustellen. Dies kann dadurch realisiert werden, dass die rohrförmige Aufnahme durch eine Ebene in zwei Rohrteile geteilt ist. Diese Ebene weist die Längsachse des Rohres auf oder ist parallel zur Längsachse des Rohres, schneidet aber das Rohr. Die Rohrteile sind in Bezug zueinander derart beweglich, dass eine seitliche Öffnung des rohrförmigen Profils bereitgestellt werden kann. Die Aufnahme kann damit öffenbar und/oder schließbar ausgestaltet werden. In einer beispielhaften Ausführungsform wird dies dadurch ermöglicht, dass das eine Rohrteil von dem anderen Rohrteil abgenommen werden kann. Vorzugsweise sind die Rohrteile lösbar miteinander verbunden, zum Beispiel mittels einer Rastverbindung. Das ermöglicht es, nach dem Einführen eines Stangenarms in die seitliche Öffnung die Rohrteile wieder miteinander zu verbinden. In einer weiteren beispielhaften Ausführungsform wird dies dadurch ermöglicht, dass die einen einander zugewandten Enden der Rohrteile, die durch die Ebene getrennt sind, miteinander über ein Scharniergelenk verbunden sind. Die anderen einander zugewandten Enden der Rohrteile, die durch die Ebene getrennt sind, können lösbar miteinander verbunden sein, zum Beispiel mittels einer Rastverbindung.

In einer bevorzugten Ausführungsform ist in dem flexiblen Element ein dritter Fluidkanalabschnitt ausgebildet, der einen Abschnitt des Fluidkanals bildet. Der dritte Fluidkanalabschnitt ist vorzugsweise zwischen dem ersten Fluidkanalabschnitt und dem zweiten Fluidkanalabschnitt angeordnet. Vorzugsweise ist er dabei unmittelbar mit dem ersten Fluidkanalabschnitt und unmittelbar mit dem zweiten Fluidkanalabschnitt verbunden.

Vorzugsweise wird der dritte Fluidkanalabschnitt dadurch gebildet, dass das flexible Element zumindest eine Lücke überdeckt, die sich zwischen dem ersten Fluidkanalabschnitt und dem zweiten Fluidkanalabschnitt befindet. Durch diese Überdeckung entsteht ein Raum zwischen dem ersten Fluidkanalabschnitt und dem zweiten Fluidkanalabschnitt, durch den Fluid von dem ersten Fluidkanalabschnitt zu dem zweiten Fluidkanalabschnitt strömen kann.

In einer bevorzugten Ausführungsform weist das Anbauteil einen Träger auf, der einen Verbindungsabschnitt zum Verbinden des Trägers mit dem Stangenarm aufweist. Das erste formstabile Element und das zweite formstabile Element sind an diesem Träger derart angeordnet, dass ein Abschnitt des Verbindungsabschnitts des Trägers den Verbindungsabschnitt des ersten formstabilen Elements ausbildet und ein anderer Abschnitt des Verbindungsabschnitts des Trägers den Verbindungsabschnitt des zweiten formstabilen Elements ausbildet. Der Verbindungsabschnitt des ersten formstabilen Elements und der Verbindungsabschnitt des zweiten formstabilen Elements können unmittelbar miteinander verbunden sein. Alternativ können sie mittelbar miteinander verbunden sein, indem ein Abschnitt des Verbindungsabschnitts des Trägerteils, der nicht den Verbindungsabschnitt des ersten formstabilen Elements und der nicht den Verbindungsabschnitt des zweiten formstabilen Elements ausbildet, zwischen ihnen angeordnet ist. Vorzugsweise ist der Träger aus einem Stück ausgebildet. Der Träger kann beispielsweise durch Spritzgießen hergestellt sein.

Der Träger weist den Verbindungsabschnitt des ersten formstabilen Elements und den Verbindungsabschnitt des zweiten formstabilen Elements auf. Der Träger bildet somit eine Unterbaugruppe des Wischerarms. Dadurch wird der Montageaufwand verringert. Insbesondere entfallen dadurch die Schritte, den Verbindungsabschnitt des ersten formstabilen Elements mit dem Verbindungsabschnitt des zweiten formstabilen Elements zu verbinden oder die Position des Verbindungsabschnitts des ersten formstabilen Elements zu der Position des Verbindungsabschnitts des zweiten formstabilen Elements festzulegen. Da der erste Fluidkanalabschnitt bevorzugt eine feste Position in Bezug auf den Verbindungsabschnitt des ersten formstabilen Elements aufweist und der zweite Fluidkanalabschnitt bevorzugt eine feste Position in Bezug auf den Verbindungsabschnitt des zweiten formstabilen Elements aufweist, weisen sie somit auch zueinander und jeweils zum Träger eine feste Position auf. Dadurch weisen Teile des ersten Fluidkanalabschnitts wie zum Beispiel Fluidaustritte nicht nur eine konstante Ausrichtung zum Verbindungsabschnitt des ersten formstabilen Elements auf, sondern auch eine konstante Ausrichtung zum zweiten formstabilen Element und zum Träger. Entsprechendes gilt für die Teile des zweiten Fluidkanalabschnitts. Dies erhöht die Zuverlässigkeit der Funktion des Scheibenwischers.

Vorzugsweise sind die Aufnahme des ersten formstabilen Elements, die Aufnahme des zweiten formstabilen Elements und die Aufnahme des Trägers rohrförmig. Insbesondere bevorzugt haben diese Aufnahmen ein geschlossenes Profil, das insbesondere bevorzugt im Wesentlichen rechteckig ist. Damit kann die gesamte Unterbaugruppe durch Einschieben des Stangenarms in die Aufnahmen des Trägers mit dem Stangenarm verbunden werden.

In einer bevorzugten Ausführungsform ist an dem ersten formstabilen Element ein Anschluss für einen Schlauch oder einen Düsenträger ausgebildet. Ferner oder alternativ ist an dem zweiten formstabilen Element ein Anschluss für einen Schlauch ausgebildet. Unter dem Begriff "Anschluss" ist im Sinne der Erfindung ein Mittel zu verstehen, dass eine Verbindung zwischen dem formstabilen Element und einem Anschlussteil ermöglicht. Insbesondere handelt es sich dabei um eine Kupplung oder einen Kupplungsteil. Vorzugsweise ist der Anschluss in Fluidverbindung mit dem Fluidkanalabschnitt des formstabilen Elements. Vorzugsweise weist der Anschluss ein Dichtungsmittel auf, das dazu dient, dass bei Herstellung der Verbindung kein Fluid an der Anschlussstelle austritt. Als Anschlussteil kommen beispielsweise Schläuche, Düsen, Düsenträger, Verbindungsstutzen, Verbindungsrohre, Kopplungsmittel, das flexible Element oder andere formstabile Elemente in Betracht. Vorzugsweise ist der Anschluss des zweite formstabilen Elements für einen Schlauch, der Fluid von der Fluidquelle zu dem Anbauteil führt, vorgesehen. Insbesondere bevorzugt ist dabei der Anschluss des ersten formstabilen Elements für einen Schlauch, der das Fluid von dem Anbauteil zu einem Düsenträger führt, vorgesehen oder für einen Düsenträger vorgesehen. Insbesondere handelt es sich bei dem Anschluss um einen Anschlussstutzen. Der Anschlussstutzen kann ein Außen- oder Innengewinde aufweisen. Der Anschluss kann auch eine Ausnehmung sein, zum Beispiel eine Bohrung mit einem Innengewinde.

In einer bevorzugten Ausführungsform weist das erste formstabile Element und/oder das zweite formstabile Element einen Fluidaustritt auf und/oder ein Düsenelement. Unter dem Begriff "Fluidaustritt" ist im Sinne der Erfindung eine Ausnehmung zu verstehen, die in dem ersten formstabilen Element, in dem zweiten formstabilen Element oder in dem flexiblen Element angebracht ist, die in Fluidverbindung mit dem Fluidkanalabschnitt dieses Elements steht und über die Fluid aus dem Element austreten kann. Die Ausnehmung kann beispielsweise zylinderförmig sein. Die Ausnehmung kann beispielsweise auch die Form einer Düse aufweisen und wird in diesem Fall auch Düse genannt.

Unter dem Begriff "Düsenelement" ist im Sinne der Erfindung ein Bauteil, das eine Düse aufweist, zu verstehen. Es kann sich dabei zum Beispiel um eine Kugeldüse oder einen Düsenchip handeln. Das Düsenelement ist mit dem formstabilen Element oder mit dem flexiblen Element in Fluidverbindung, so dass Fluid aus dem Fluidkanalabschnitt über die Düse des Düsenelements austreten kann.

Indem ein Element einen Fluidaustritt oder ein Düsenelement aufweist, kann Fluid zusätzlich auf die Scheibe oder auf das Wischerblatt aufgetragen werden oder das Wischerblatt kann dadurch benetzt werden. Vorzugsweise weisen alle formstabilen Elemente einen oder mehrere Fluidaustritte oder Düsenelemente auf.

In einer bevorzugten Ausführungsform weist das flexible Element vorstehende Windabweiser auf. Unter dem Begriff "Windabweiser" ist ein Mittel zu verstehen, dass dazu dient, den Fahrtwind um das Anbauteil herum zu leiten. Der Windabweiser verringert den Widerstand durch den Fahrtwind und erhöht die Anpresskraft auf das Anbauteil und somit auf das Wischerblatt. Dadurch wird gewährleistet, dass das Wischerblatt auch bei hohen Fahrtgeschwindigkeiten an der Fahrzeugscheibe anliegt. Eine hohe Wischqualität wird dadurch ermöglicht. Zudem kann der Windabweiser derart ausgebildet sein, dass er den Fahrtwind zu Gunsten des Wasserstrahls lenkt, der dadurch entsteht, dass das Fluid aus einer Düse auf die Fahrzeugscheibe aufgebracht wird. Der Windabweiser ist als Teil des flexiblen Elements ausgebildet. Er wird durch die Form des flexiblen Elements gebildet. Ein separates Bauteil ist nicht erforderlich. Indem der Windabweiser Teil des flexiblen Elements ist, kann er an Stellen des Stangenarms angebracht werden, an denen insbesondere formstabilen Windabweisern nicht oder vergleichsweise umständlich angebracht werden können.

In einer bevorzugten Ausführungsform weist das flexible Element einen Grundkörper und einen Endabschnitt auf. Zwischen dem Grundkörper und dem Endabschnitt ist ein Knickabschnitt vorgesehen ist. Insbesondere sind der Grundkörper, der Endabschnitt und der Knickabschnitt flexibel. Dabei ist die elastische Verformbarkeit des Grundkörpers verringert, wenn der Grundkörper die formstabilen Elemente umschließt.

Damit erfolgt insbesondere eine Anpassung an einem geläufigen Typ von Stangenarm, der einen ersten und einen zweiten im Wesentlichen gerade Abschnitte aufweist, die aneinander anschließen und die in einem Winkel, insbesondere stumpfen Winkel, zueinander angeordnet sind. Indem das flexible Element bereits eine Form aufweist, die der Form des Stangenarms angenähert ist oder sogar entspricht, wird der Montageschritt, bei dem das flexible Element in Überdeckung mit dem Stangenarm gebracht wird, erleichtert und die Anpassung des flexiblen Elements an den Stangenarm verbessert.

Der Knickabschnitt verbindet den Grundkörper und den Endabschnitt. Der Knickabschnitt ist im unmontierten Zustand im Wesentlichen gerade und im montierten Zustand im Wesentlichen winkelförmig. Die winkelige Form wird dadurch eingenommen, dass die elastischen Bereiche beim Aufschieben der winkeligen Form der Scheibenwischarmstange folgen. Vorzugsweise weist der Knickabschnitt einen stumpfen Winkel auf.

Vorzugsweise sind der Grundkörper und der Endabschnitt im Wesentlichen gerade Abschnitte des flexiblen Elements. Vorzugsweise ist der Grundkörper der längere Abschnitt.

In einer bevorzugten Ausführungsform weist das Anbauteil einen seitlichen Fluidaustritt, durch den ein Teil des durch den Fluidkanal durchgeführten Fluids ausgebracht werden kann.

Unter dem Begriff "Fluidaustritt" ist im Sinne der Erfindung - wie schon oben ausgeführt - eine Ausnehmung zu verstehen, die in dem ersten formstabilen Element, in dem zweiten formstabilen Element oder in dem flexiblen Element angebracht ist, die in Fluidverbindung mit dem Fluidkanalabschnitt dieses Elements steht und über die Fluid aus dem Element austreten kann.

Insbesondere handelt es sich bei dem Fluidaustritt, der von einem Element aufgewiesen wird, um einen Fluidaustritt, der von dem Anbauteil aufgewiesen wird. Dabei kann Fluid nicht nur aus dem Element, sondern auch aus dem Anbauteil austreten. Das ist beispielsweise der Fall, wenn die Außenfläche des Elements zugleich die Außenfläche des Anbauteils ist. Das ist beispielsweise auch dann der Fall, wenn das formstabile Element, das einen Fluidaustritt aufweist, von dem flexiblen Element, das einen Fluidaustritt aufweist, überdeckt wird und diese Fluidaustritte in Fluidverbindung stehen.

Indem das Anbauteil einen Fluidaustritt aufweist, kann Fluid zusätzlich auf die Scheibe oder auf das Wischerblatt aufgetragen oder das Wischerblatt kann dadurch benetzt werden.

Unter dem Begriff "seitlich" ist in diesem Kontext zu verstehen, dass der Fluidaustritt nicht parallel zur Längsachse des Anbauteils ausgerichtet ist. Vorzugsweise ist unter "seitlich" zu verstehen, dass der Fluidaustritt senkrecht zur Längsachse des Anbauteils ausgerichtet ist.

Vorzugsweise weist das Anbauteil mehrere seitliche Fluidaustritte auf.

Die Erfindung betrifft auch einen Wischerarm eines Scheibenwischers eines Fahrzeugs. Der Wischerarm weist einen Stangenarm und ein erfindungsgemäßes Anbauteil auf. Das erste formstabile Element ist über den Verbindungsabschnitt des ersten formstabilen Elements mit dem Stangenarm verbunden, wobei der Stangenarm in der Aufnahme des Verbindungsabschnitts des ersten formstabilen Elements untergebracht ist. Zusätzlich oder alternativ ist das zweite formstabile Element über den Verbindungsabschnitt des zweiten formstabilen Elements mit dem Stangenarm verbunden, wobei der Stangenarm in der Aufnahme des Verbindungsabschnitts des zweiten formstabilen Elements untergebracht ist. Ferner ist das flexible Element über den Verbindungsabschnitt des flexiblen Elements mit dem Stangenarm verbunden, wobei der Stangenarm in der Aufnahme des Verbindungsabschnitts des flexiblen Elements untergebracht ist. Dabei überdeckt das flexible Element das erste formstabile Element zumindest abschnittweise und es überdeckt auch das zweite formstabile Element zumindest abschnittweise. In einer bevorzugten Ausführungsform überdeckt das flexible Element das erste formstabile Element vollständig und es überdeckt auch das zweite formstabile Element vollständig. Vorzugsweise umschließt das flexible Element das erste formstabile Element und es umschließt auch das zweite formstabile Element.

In einer bevorzugten Ausführungsform des Wischerarms ist das Anbauteils mit dem Stangenarm derart verbunden, dass eine Verschiebung des Anbauteils in Bezug auf den Stangenarm in Längsrichtung des Stangenarms verhindert wird, insbesondere durch eine Verrastung. Das kann beispielsweise dadurch eine Rastverbindung erreicht werden. Üblicherweise erfolgt dies über zwei komplementäre Rastelemente, einem Rastmittel und einer Rastausnehmung. Ein Rastelement kann beispielsweise an dem ersten formstabilen Element angebracht sein und das zweite Rastelement, das zu dem ersten Rastelemente komplementär ist, kann an dem Stangenarm angebracht sein. Die Rastverbindung hat den Vorteil, dass sie eine lösbare Verbindung herstellen kann.

Vorzugsweise ist das Anbauteils mit dem Stangenarm derart verbunden, dass eine Verdrehung des Anbauteils um die Längsrichtung des Stangenarms verhindert wird. Dies wird vorteilhafterweise durch die Form des Stangenarms und die Form der Aufnahme des Verbindungsabschnitts gewährleistet. So kann beispielsweise der Stangenarm eine polygonale Form aufweisen und die Aufnahmen, in denen er untergebracht ist, können ebenfalls eine komplementär polygonale Form aufweisen.

In einer bevorzugten Ausführungsform des Wischerarms überdeckt das flexible Element den Stangenarm über die gesamte Länge des Stangenarms und/oder über den gesamten Umfang des Stangenarms. In einer bevorzugten Ausführungsform weist der Wischerarm einen Düsenträger mit einer Düse auf. Die Düse ist in Fluidverbindung mit dem Fluidkanal des Anbauteils.

Die Erfindung betrifft auch einen Scheibenwischer eines Fahrzeugs mit einem erfindungsgemäßen Wischerarm und einem Wischerblatt.

Die Erfindung betrifft auch ein Verfahren zum Montieren eines Fluidkanals zum Durchleiten eines Fluids an einem Stangenarm eines Wischerarms eines Scheibenwischers. Ein erfindungsgemäßes Anbauteil wird dabei an dem Stangenarm befestigt wird.

Vorzugsweise werden dabei zunächst das erste formstabile Element und das zweite formstabile Element mit dem flexiblen Element derart verbunden, dass das flexible Element das erste formschlüssige Element zumindest abschnittweise überdeckt und das flexible Element das zweite formschlüssige Element zumindest abschnittweise überdeckt. Danach werden die so verbundenen Elemente als Einheit an dem Stangenarm montiert. Alternativ werden zunächst das erste und das zweite formstabile Element an dem Stangenarm montiert. Danach wird das flexible Element an dem Stangenarm montiert.

Die Erfindung betrifft auch eine Verwendung eines erfindungsgemäßen Anbauteils zum Vorsehen eines Fluidkanals an einem Stangenarm eines Wischerarms eines Scheibenwischers.

Die Erfindung betrifft auch ein System umfassend ein erstes erfindungsgemäßes Anbauteil ein zweites erfindungsgemäßes Anbauteil. Das System weist ferner ein Kopplungsmittel auf, über die das erste Anbauteil mit dem zweiten Anbauteil verbunden ist.

Unter dem Begriff "Kopplungsmittel" ist im Sinne der Erfindung ein Mittel zu verstehen, dass eine Verbindung zwischen dem ersten Anbauteil und dem zweiten Anbauteil herstellen kann. Vorzugsweise ist das Kopplungsmittel rohrförmig und kann mit einem Ende an einer Kopplungsstelle des ersten Anbauteils und mit einem anderen Ende an einer Kopplungsstelle des zweiten Anbauteils verbunden werden. Bei den Kopplungsstellen kann es sich um Anschlüsse handeln (siehe oben). Bevorzugt stehen dabei die Fluidkanäle der verbundenen Anbauteile in Fluidverbindung. Insbesondere bevorzugt ist die Verbindung dicht, so dass kein Fluid im Verbindungsbereich austreten kann. Die Dichtigkeit kann dabei beispielsweise mittels einer radialen Dichtung in dem rohrförmigen Kopplungsmittel erreicht werden. Das Kopplungsmittel kann beispielsweise auch schlauchartig sein.

Die Erfindung wird anhand der nachfolgenden Zeichnungen veranschaulicht, die bloß beispielhafte Ausführungsformen der Erfindung zeigen. Darin zeigen:
- Fig. 1: eine beispielhafte Ausführungsform des erfindungsgemäßen Anbauteils, das mit einem Stangenarm verbunden,
- Fig. 2: die Ausführungsform aus Fig. 1, bei dem das flexible Element entfernt wurde,
- Fig. 3: eine vergrößerte Teilansicht des Anbauteils aus Fig. 1, in der der Stangenarm ausgeblendet wurde;
- Fig. 4: eine beispielhafte Ausführungsform eines erfindungsgemäßen Wischerarms;
- Fig. 5: ein weiteres Beispiel für ein erfindungsgemäßes Anbauteil
- Fig. 6: eine Schnittansicht des Anbauteils aus Fig. 5.

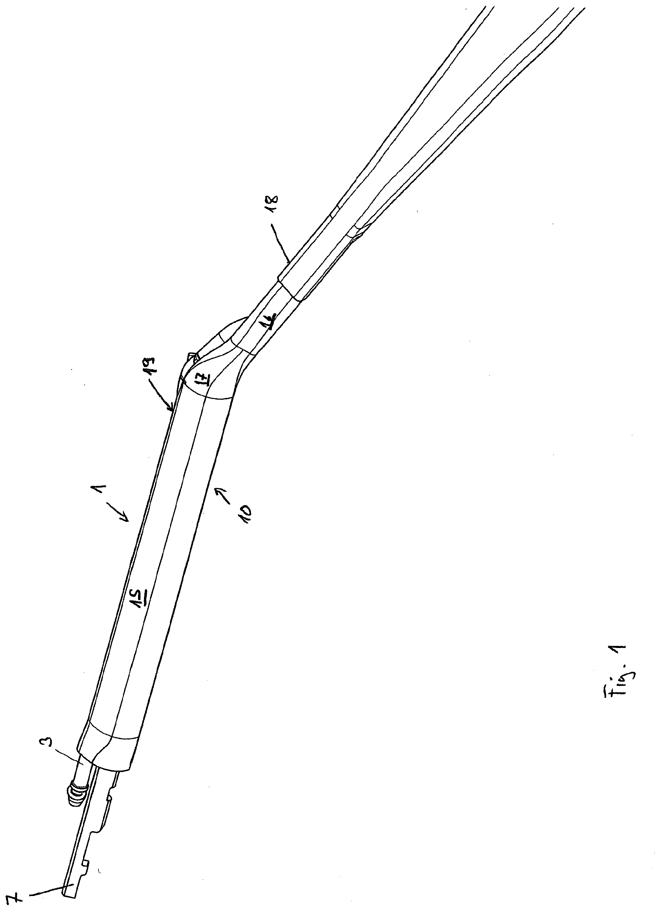

Figur 1 zeigt eine beispielhafte Ausführungsform des Anbauteils 1 für einen einen Stangenarm aufweisenden Wischerarm eines Scheibenwischers eines Fahrzeugs.

Das Anbauteil 1 weist einen Fluidkanal zum Durchleiten eines Fluids auf, der in Figur 1 nicht zu sehen ist, da der Fluidkanal sich im Inneren des Anbauteils 1 befindet.

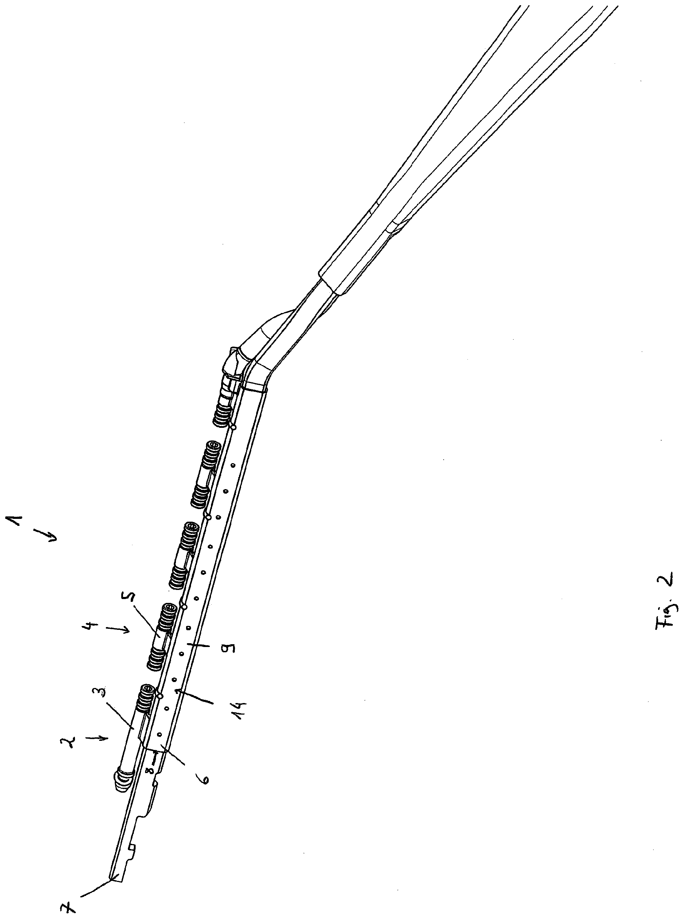

Das Anbauteil weist ferner ein erstes formstabiles Element auf. Das erste formstabile Element ist in Figur 2 gut zu erkennen und ist dort mit dem Bezugszeichen 2 versehen. In dem ersten formstabilen Element 2 ist ein erster Fluidkanalabschnitt 3 ausgebildet.

Im Folgenden wird weiterhin Bezug auf Figur 2 genommen: Das Anbauteil 1 weist ferner ein zweites formstabiles Element 4 auf. In dem zweiten formstabilen Element 4 ist ein zweiter Fluidkanalabschnitt 5 ausgebildet.

Das erste formstabile Element 2 weist ferner einen Verbindungsabschnitt 6 zum Verbinden des ersten formstabilen Elements 2 mit dem Stangenarm 7 auf. Der Verbindungsabschnitt 6 weist eine Aufnahme zur Unterbringung des Stangenarms 7 auf. Die Aufnahme wiederum weist eine Öffnung 8 auf, durch die der Stangenarm in die Aufnahme eingeführt werden kann.

Das zweite formstabile Element 4 weist ferner einen Verbindungsabschnitt 9 zum Verbinden des zweiten formstabilen Elements 4 mit dem Stangenarm 7 auf. Der Verbindungsabschnitt 9 weist eine Aufnahme zur Unterbringung des Stangenarms 7 auf. Die Aufnahme wiederum weist eine Öffnung auf, durch die der Stangenarm in die Aufnahme eingeführt werden kann.

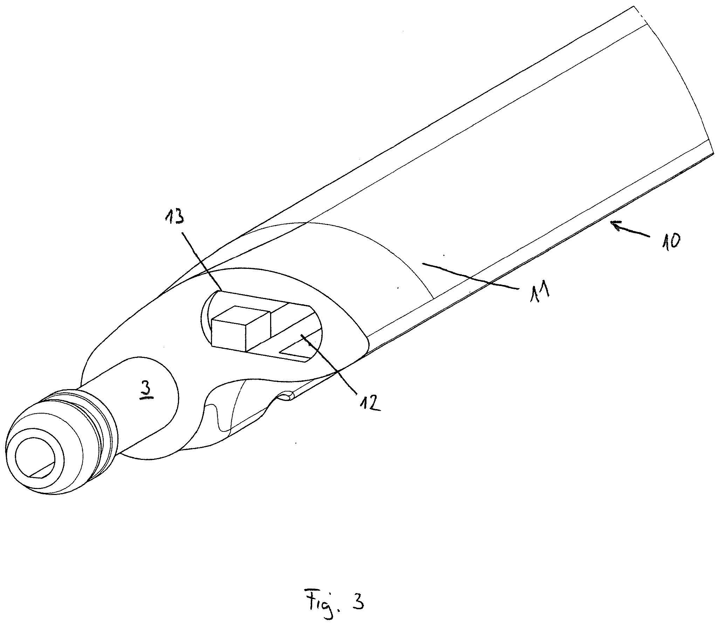

Im Folgenden wird wieder auf Figur 1 Bezug genommen: Ein flexibles Element 10 ist vorgesehen, das einen Verbindungsabschnitt zum Verbinden des flexiblen Elements 10 mit dem Stangenarm 7 aufweist. Im Folgenden wird Bezug auf Figur 3 genommen: Der Verbindungsabschnitt 11 weist eine Aufnahme 12 zur Unterbringung des Stangenarms 7 auf. Die Aufnahme 12 hat eine Öffnung 13, durch die der Stangenarm in die Aufnahme eingeführt werden kann.

Im Folgenden wird wieder Bezug genommen auf Figur 1: Das flexible Element 10 überdeckt in dieser beispielhaften Ausführungsform das erste formstabile Element nahezu vollständig. Lediglich ein Teil des ersten Fluidkanalabschnitts 3 ist zu erkennen. Das flexible Element 10 überdeckt auch das zweite formstabile Element. Dieses ist vollständig überdeckt, weshalb es in Figur 1 nicht zu sehen ist.

Im Folgenden wird wieder Bezug genommen auf Figur 2: Das Anbauteil 1 weist einen Träger 14 mit einem Verbindungsabschnitt zum Verbinden des Trägers mit dem Stangenarm 7 auf. Das erste formstabile Element 2 und das zweite formstabile Element 4 sind an dem Träger derart angeordnet, dass ein Abschnitt des Verbindungsabschnitts des Trägers den Verbindungsabschnitt 6 des ersten formstabilen Elements 2 ausbildet und ein anderer Abschnitt des Verbindungsabschnitts des Trägers den Verbindungsabschnitt 9 des zweiten formstabilen Elements 4 ausbildet. Der Träger 14 ist in diesem Beispiel rohrförmig. Durch Aufschieben des rohrförmigen Trägers 14 auf den Stangenarm 7 wird somit auch das erste formstabile Element und das zweite formstabile Element mit dem Stangenarm verbunden.

In Figur 1 ist auch zu sehen, dass das flexible Element 10 einen Grundkörper 15 und einen Endabschnitt 16 aufweist und zwischen dem Grundkörper 15 und dem Endabschnitt 16 ein Knickabschnitt 17 vorgesehen ist. Daher kann sich das flexible Element besonders gut der winkeligen Form des Stangenarms 7 anpassen. Dabei überdeckt das flexible Element nahezu den gesamten Stangenarm, also bis zum Hebelarm 18 des Wischerarms. Da in diesem Beispiel das flexible Element eine windabweisende Fläche 19 über die gesamte Länge des flexiblen Elements aufweist, kann somit nahezu über die gesamte Länge des Stangenarms der Fahrtwind zu Gunsten der Funktion des Scheibenwischers ausgenutzt und beeinflusst werden. So kann der Widerstand durch den Fahrtwind verringert werden und die Anpresskraft auf das Anbauteil und somit auf das Wischerblatt erhöht werden. Dadurch wird gewährleistet, dass das Wischerblatt auch bei hohen Fahrtgeschwindigkeiten an der Fahrzeugscheibe anliegt. Eine hohe Wischqualität wird dadurch ermöglicht. Zudem ist die windabweisende Fläche 19 derart ausgebildet, dass sie den Fahrtwind zu Gunsten des Strahls lenkt, der dadurch entsteht, dass das Fluid aus einer Düse auf die Fahrzeugscheibe aufgebracht wird.

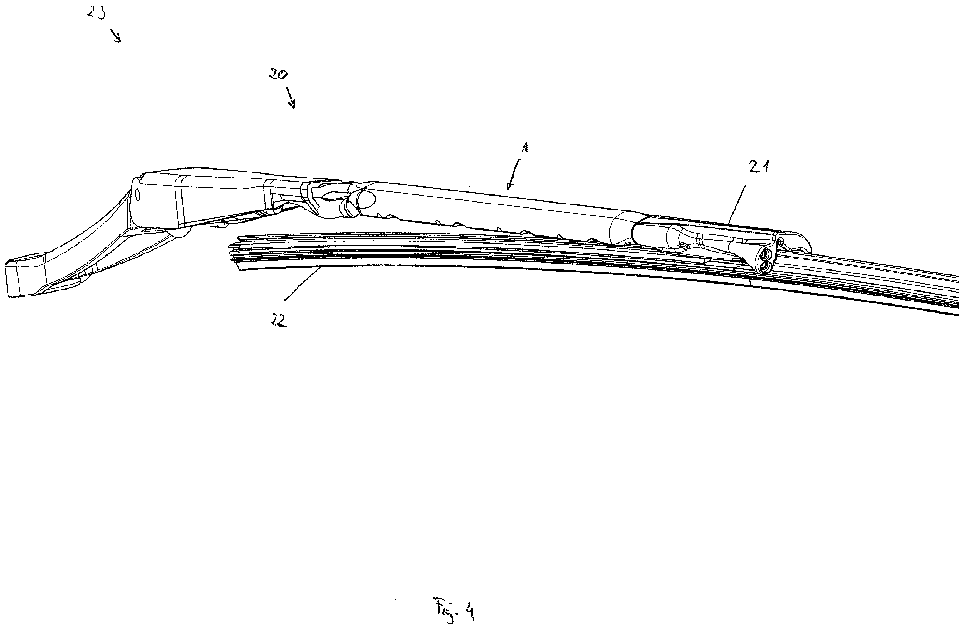

Figur 4 zeigt eine beispielhafte Ausführungsform eines erfindungsgemäßen Scheibenwischers 23 mit Wischerarm 20 und Wischerblatt 22. Der Wischerarm 20 umfasst eine beispielhafte Ausführungsform des erfindungsgemäßen Anbauteils 1 und ist mit dem Wischerblatt 22 verbunden. Es ist ferner zu sehen, dass das Anbauteil 1 mit einem Düsenträger 21 gekoppelt ist.

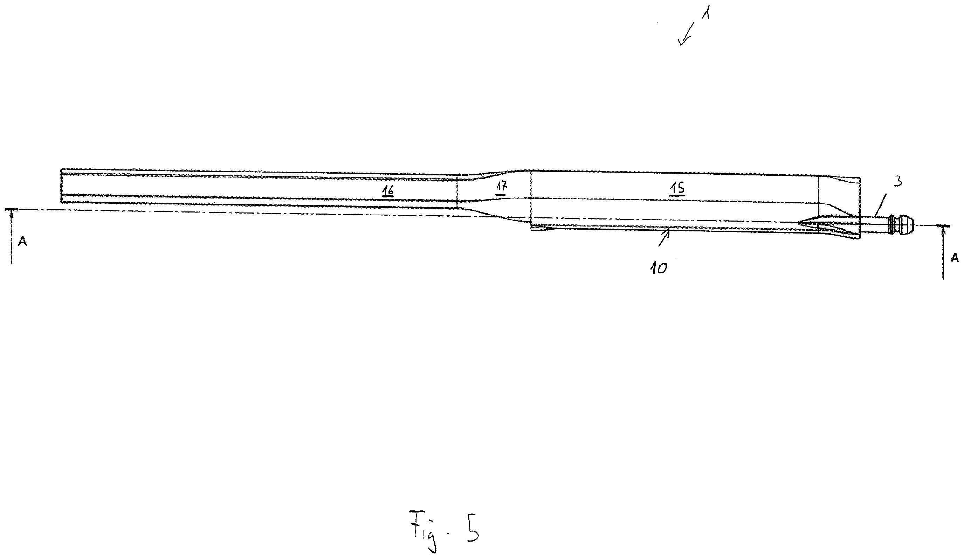

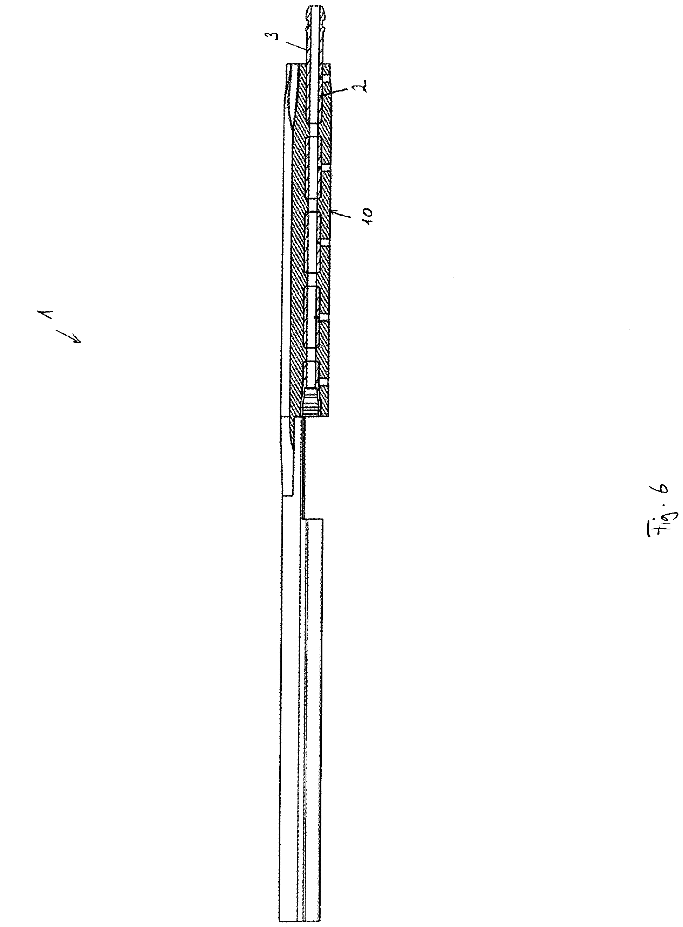

Figur 5 zeigt ein weiteres Ausführungsbeispiel eines erfindungsgemäßen Anbauteils 1. Es ist den zuvor beschrieben Ausführungsformen ähnlich. Gleiche Bezugszeichen referenzieren die gleichen Merkmale wie in den Ausführungsformen zuvor. Figur 6 zeigt eine Schnittansicht gemäß den Schnittpfeilen A aus der Figur 5. Hierin ist zu erkennen, wie das flexible Element 10 das formstabile Element 2 (und/oder das zweite formstabile Element 4) umschließt.

## Patentansprüche

1. Anbauteil (1) für einen einen Stangenarm (7) aufweisenden Wischerarm (20) eines Scheibenwischers eines Fahrzeugs wobei das Anbauteil (1)
einen Fluidkanal zum Durchleiten eines Fluids und
ein erstes formstabiles Element (2) aufweist, wobei in dem ersten formstabilen Element (2) ein erster Fluidkanalabschnitt (3) ausgebildet ist, und
ein zweites formstabiles Element (4) vorgesehen ist, wobei in dem zweiten formstabilen Element (4) ein zweiter Fluidkanalabschnitt ausgebildet ist,
**dadurch gekennzeichnet, dass**
das erste formstabile Element (2) einen Verbindungsabschnitt (6) zum Verbinden des ersten formstabilen Elements (2) mit dem Stangenarm (7) aufweist, wobei der Verbindungsabschnitt (6) eine Aufnahme zur Unterbringung des Stangenarms (7) aufweist und die Aufnahme eine Öffnung (8), durch die der Stangenarm (7) in die Aufnahme eingeführt werden kann, aufweist
und/oder
das zweite formstabile Element (4) einen Verbindungsabschnitt (9) zum Verbinden des zweiten formstabilen Elements (4) mit dem Stangenarm (7) aufweist, wobei der Verbindungsabschnitt eine Aufnahme zur Unterbringung des Stangenarms (7) aufweist und die Aufnahme eine Öffnung, durch die der Stangenarm (7) in die Aufnahme eingeführt werden kann, aufweist
und
ein flexibles Element (10) vorgesehen ist, das einen Verbindungsabschnitt (11) zum Verbinden des ersten formstabilen Elements (2) mit dem Stangenarm (7) aufweist, wobei der Verbindungsabschnitt (11) eine Aufnahme (12) zur Unterbringung des Stangenarms (7) aufweist und die Aufnahme (12) eine Öffnung (13), durch die der Stangenarm (7) in die Aufnahme (12) eingeführt werden kann, aufweist,
wobei das flexible Element (10) das erste formstabile Element (2) zumindest abschnittweise überdeckt und das flexible Element (10) das zweite formstabile Element (4) zumindest abschnittweise überdeckt.

2. Anbauteil (1) nach Anspruch 1, **dadurch gekennzeichnet, dass** in dem flexiblen Element (10) ein dritter Fluidkanalabschnitt ausgebildet ist.

3. Anbauteil (1) nach Anspruch 1 oder 2, **gekennzeichnet durch** einen Träger (14) mit einem Verbindungsabschnitt zum Verbinden des Trägers (14) mit dem Stangenarm (7), wobei das erste formstabile Element (2) und das zweite formstabile Element (4) an dem Träger (14) derart angeordnet sind, dass ein Abschnitt des Verbindungsabschnitts des Trägers (14) den Verbindungsabschnitt (6) des ersten formstabilen Elements (2) ausbildet und ein anderer Abschnitt des Verbindungsabschnitts des Trägers (14) den Verbindungsabschnitt (9) des zweiten formstabilen Elements (4) ausbildet.

4. Anbauteil (1) nach einem der Ansprüche 1 bis 3, **dadurch gekennzeichnet, dass** an dem ersten formstabilen Element (2) ein Anschluss für einen Schlauch und/oder einen Düsenträger und/oder ein Wischblatt und/oder einen Befestiger ausgebildet ist und/oder an dem zweiten formstabilen Element (4) ein Anschluss für einen Schlauch ausgebildet ist.

5. Anbauteil (1) nach einem der Ansprüche 1 bis 4, **dadurch gekennzeichnet, dass** das erste formstabile Element (2) und/oder das zweite formstabile Element (4) einen Fluidaustritt oder ein Düsenelement aufweist.

6. Anbauteil (1) nach einem der Ansprüche 1 bis 5, **dadurch gekennzeichnet, dass** das flexible Element (10) einen vorstehenden Windabweiser (19) aufweist.

7. Anbauteil (1) nach einem der Ansprüche 1 bis 6, **dadurch gekennzeichnet, dass** das flexible Element (10) einen Grundkörper (15) und einen Endabschnitt (16) aufweist und zwischen dem Grundkörper (15) und dem Endabschnitt (16) ein Knickabschnitt (17) vorgesehen ist.

8. Anbauteil (1) nach einem der Ansprüche 1 bis 7, **gekennzeichnet durch** einen seitlichen Fluidaustritt, durch den ein Teil des durch den Fluidkanal durchgeführten Fluids ausgebracht werden kann.

9. Wischerarm (20) eines Scheibenwischers eines Fahrzeugs mit einen Stangenarm (7) **gekennzeichnet durch** ein Anbauteil (1) nach einem der Ansprüche 1 bis 8, wobei
das erste formstabile Element (2) über den Verbindungsabschnitt (6) des ersten formstabilen Elements (2) mit dem Stangenarm (7) verbunden ist, wobei der Stangenarm (7) in der Aufnahme des Verbindungsabschnitts (6) des ersten formstabilen Elements (2) untergebracht ist,
und/oder
das zweite formstabile Element (4) über den Verbindungsabschnitt (9) des zweiten formstabilen Elements (4) mit dem Stangenarm (7) verbunden ist, wobei der Stangenarm (7) in der Aufnahme des Verbindungsabschnitts (9) des zweiten formstabilen Elements (4) untergebracht ist,
und
das flexible Element (10) über den Verbindungsabschnitt (11) des flexiblen Elements mit dem Stangenarm (7) verbunden ist, wobei der Stangenarm in der Aufnahme (12) des Verbindungsabschnitts (11) des flexiblen Elements (10) untergebracht ist,
wobei das flexible Element (10) das erste formstabile Element (2) zumindest abschnittweise überdeckt und das flexible Element (10) das zweite formstabile Element (4) zumindest abschnittweise überdeckt.

10. Wischerarm (20) nach Anspruch 9, **dadurch gekennzeichnet, dass** das Anbauteils (1) mit dem Stangenarm (7) derart verbunden ist, dass eine Verschiebung des Anbauteils (1) in Bezug auf den Stangenarm (7) in Längsrichtung des Stangenarms (7) verhindert wird.

11. Wischerarm (20) nach Anspruch 9 oder 10, **dadurch gekennzeichnet, dass** das flexible Element (10) den Stangenarm (7) und den Träger teilweise, insbesondere über die gesamte Länge des Stangenarms (7), und/oder über den gesamten Umfang des Stangenarms (7) überdeckt.

12. Wischerarm (20) nach einem der Ansprüche 9 bis 11, **gekennzeichnet durch** einen Düsenträger (21) mit einer Düse und einem Wischblattadapter, die in Fluidverbindung mit dem Fluidkanal des Anbauteils (1) ist.

13. Scheibenwischer (23) eines Fahrzeugs mit einem Wischerarm (20) nach einem der Ansprüche 9 bis 12 und einem Wischerblatt (22).

14. Verfahren zum Montieren eines Fluidkanals zum Durchleiten eines Fluids an einem Stangenarm (7) eines Wischerarms (20) eines Scheibenwischers (23), **dadurch gekennzeichnet, dass** ein Anbauteil (1) nach einem der Ansprüche 1 bis 8 an dem Stangenarm (7) befestigt wird.

15. System umfassend ein erstes Anbauteil nach einem der Ansprüche 1 bis 8 und ein zweites Anbauteil nach einem der Ansprüche 1 bis 8, **gekennzeichnet durch** ein Kopplungsmittel, über das das erste Anbauteil mit dem zweiten Anbauteil verbunden ist.

## Claims

1. Attachment (1) for a rod arm (7) having a wiper arm (20) of a windscreen wiper of a vehicle, wherein the attachment (1)
has a fluid channel for the passage of a fluid and
a first dimensionally stable element (2), wherein a first fluid channel section (3) is formed in the first dimensionally stable element (2), and a second dimensionally stable element (4) is provided, wherein a second fluid channel section is formed in the second dimensionally stable element (4),
**characterised in that**
the first dimensionally stable element (2) has a connecting section (6) for connecting the first dimensionally stable element (2) to the rod arm (7), wherein the connecting section (6) has a receptacle to accommodate the rod arm (7) and the receptacle has an opening (8), through which the rod arm (7) can be inserted into the receptacle, and/or
the second dimensionally stable element (4) has a connecting section (9) for connecting the second dimensionally stable element (4) to the rod arm (7), wherein the connecting section has a receptacle to accommodate the rod arm (7) and the receptacle has an opening, through which the rod arm (7) can be inserted into the receptacle, and
a flexible element (10) is provided, which has a connecting section (11) for connecting the first dimensionally stable element (2) to the rod arm (7), wherein the connecting section (11) has a receptacle (12) to accommodate the rod arm (7) and the receptacle (12) has an opening (13), through which the rod arm (7) can be inserted into the receptacle (12),
wherein the flexible element (10) at least partially covers the first dimensionally stable element (2), and the flexible element (10) at least partially covers the second dimensionally stable element (4).

2. Attachment (1) according to Claim 1, **characterised in that** a third fluid channel section is formed in the flexible element (10).

3. Attachment (1) according to Claim 1 or 2, **characterised by** a carrier (14) with a connecting section for connecting the carrier (14) to the rod arm (7), wherein the first dimensionally stable element (2) and the second dimensionally stable element (4) are arranged on the carrier (14) in such a way that one section of the connecting section of the carrier (14) forms the connecting section (6) of the first dimensionally stable element (2), and another section of the connecting section of the carrier (14) forms the connecting section (9) of the second dimensionally stable element (4).

4. Attachment (1) according to one of Claims 1 to 3, **characterised in that** a connection for a hose and/or a nozzle carrier and/or a wiper blade and/or a fastener is formed on the first dimensionally stable element (2) and/or a connection for a hose is formed on the second dimensionally stable element (4).

5. Attachment (1) according to one of Claims 1 to 4, **characterised in that** the first dimensionally stable element (2) and/or the second dimensionally stable element (4) has a fluid outlet or a nozzle element.

6. Attachment (1) according to one of Claims 1 to 5, **characterised in that** the flexible element (10) has a protruding wind deflector (19).

7. Attachment (1) according to one of Claims 1 to 6, **characterised in that** the flexible element (10) has a main body (15) and an end section (16), and a bent section (17) is provided between the main body (15) and the end section (16).

8. Attachment (1) according to one of Claims 1 to 7, **characterised by** a lateral fluid outlet, through which part of the fluid passing through the fluid channel can be expelled.

9. Wiper arm (20) of a windscreen wiper of a vehicle with a rod arm (7) **characterised by** an attachment (1) according to one of Claims 1 to 8, wherein
the first dimensionally stable element (2) is connected to the rod arm (7) by the connecting section (6) of the first dimensionally stable element (2), wherein the rod arm (7) is accommodated in the receptacle of the connecting section (6) of the first dimensionally stable element (2), and/or
the second dimensionally stable element (4) is connected to the rod arm (7) by the connecting section (9) of the second dimensionally stable element (4), wherein the rod arm (7) is accommodated in the receptacle of the connecting section (9) of the second dimensionally stable element (4), and
the flexible element (10) is connected to the rod arm (7) by the connecting section (11) of the flexible element, wherein the rod arm is accommodated in the receptacle (12) of the connecting section (11) of the flexible element (10),
wherein the flexible element (10) at least partially covers the first dimensionally stable element (2), and the flexible element (10) at least partially covers the second dimensionally stable element (4).

10. Wiper arm (20) according to Claim 9, **characterised in that** the attachment (1) is connected to the rod arm (7) in such a way that a displacement of the attachment (1) with respect to the rod arm (7) in the longitudinal direction of the rod arm (7) is prevented.

11. Wiper arm (20) according to Claim 9 or 10, **characterised in that** the flexible element (10) partially covers the rod arm (7) and the carrier, in particular over the entire length of the rod arm (7), and/or over the entire periphery of the rod arm (7).

12. Wiper arm (20) according to one of Claims 9 to 11, **characterised by** a nozzle carrier (21) with a nozzle and a wiper blade adapter, which is in fluid connection with the fluid channel of the attachment (1).

13. Windscreen wiper (23) of a vehicle with a wiper arm (20) according to one of Claims 9 to 12 and a wiper blade (22).

14. Method for mounting a fluid channel for the passage of a fluid on a rod arm (7) of a wiper arm (20) of a windscreen wiper (23), **characterised in that** an attachment (1) according to one of Claims 1 to 8 is attached to the rod arm (7).

15. System comprising a first attachment according to one of Claims 1 to 8 and a second attachment according to one of Claims 1 to 8, **characterised by** a coupling means, via which the first attachment is connected to the second attachment.

## Revendications

1. Pièce de montage (1) pour un bras de tige (7) présentant un bras d'essuie-glace (20) d'un essuie-glace d'un véhicule, la pièce de montage (1) présentant
un canal de fluide pour le passage d'un fluide et
un premier élément indéformable (2), un premier tronçon de canal de fluide (3) étant formé dans le premier élément indéformable (2), et
un deuxième élément indéformable (4) étant prévu, un deuxième tronçon de canal de fluide étant formé dans le deuxième élément indéformable (4),
**caractérisée en ce que**
le premier élément indéformable (2) présente une section de liaison (6) pour relier le premier élément indéformable (2) au bras de tige (7), la section de liaison (6) présentant un logement pour recevoir le bras de tige (7), le logement présentant une ouverture (8) à travers laquelle le bras de tige (7) peut être inséré dans le logement, et/ou
le deuxième élément indéformable (4) présente une section de liaison (9) pour relier le deuxième élément indéformable (4) au bras de tige (7), la section de liaison présentant un logement pour recevoir le bras de tige (7), le logement présentant une ouverture à travers laquelle le bras de tige (7) peut être inséré dans le logement, et
un élément flexible (10) étant prévu, qui présente une section de liaison (11) pour relier le premier élément indéformable (2) au bras de tige (7), la section de liaison (11) présentant un logement (12) pour recevoir le bras de tige (7), le logement (12) présentant une ouverture (13) à travers laquelle le bras de tige (7) peut être inséré dans le logement (12),
l'élément flexible (10) recouvrant le premier élément indéformable (2) au moins en sections et l'élément flexible (10) recouvrant le deuxième élément indéformable (4) au moins en sections.

2. Pièce de montage (1) selon la revendication 1, **caractérisée en ce qu'un** troisième tronçon de canal de fluide est formé dans l'élément flexible (10).

3. Pièce de montage (1) selon la revendication 1 ou 2, **caractérisée par** un support (14) avec une section de liaison pour relier le support (14) au bras de tige (7), le premier élément indéformable (2) et le deuxième élément indéformable (4) étant disposés sur le support (14) de telle sorte qu'une partie de la section de liaison du support (14) forme la section de liaison (6) du premier élément indéformable (2) et qu'une autre partie de la section de liaison du support (14) forme la section de liaison (9) du deuxième élément indéformable (4).

4. Pièce de montage (1) selon l'une des revendications 1 à 3, **caractérisée en ce que** sur le premier élément indéformable (2) est formé un raccord pour un tuyau flexible et/ou un porte-buse et/ou un balai d'essuie-glace et/ou un dispositif de fixation et/ou sur le deuxième élément indéformable (4) est formé un raccord pour un tuyau flexible.

5. Pièce de montage (1) selon l'une des revendications 1 à 4, **caractérisée en ce que** le premier élément indéformable (2) et/ou le deuxième élément indéformable (4) présente une sortie de fluide ou un élément de buse.

6. Pièce de montage (1) selon l'une des revendications 1 à 5, **caractérisée en ce que** l'élément flexible (10) présente un déflecteur de vent en saillie (19).

7. Pièce de montage (1) selon l'une des revendications 1 à 6, **caractérisée en ce que** l'élément flexible (10) présente un corps de base (15) et une section d'extrémité (16) et **en ce qu'**une section coudée (17) est prévue entre le corps de base (15) et la section d'extrémité (16).

8. Pièce de montage (1) selon l'une des revendications 1 à 7, **caractérisée par** une sortie de fluide latérale à travers laquelle une partie du fluide traversant le canal de fluide peut être évacuée.

9. Bras d'essuie-glace (20) d'un essuie-glace d'un véhicule avec un bras de tige (7), **caractérisé par** une pièce de montage (1) selon l'une des revendications 1 à 8,
le premier élément indéformable (2) étant relié au bras de tige (7) par la section de liaison (6) du premier élément indéformable (2), le bras de tige (7) étant logé dans le logement de la section de liaison (6) du premier élément indéformable (2), et/ou
le deuxième élément indéformable (4) étant relié au bras de tige (7) par la section de liaison (9) du deuxième élément indéformable (4), le bras de tige (7) étant logé dans le logement de la section de liaison (9) du deuxième élément indéformable (4), et
l'élément flexible (10) étant relié au bras de tige (7) par la section de liaison (11) de l'élément flexible, le bras de tige étant logé dans le logement (12) de la section de liaison (11) de l'élément flexible (10),
l'élément flexible (10) recouvrant le premier élément indéformable (2) au moins en sections et l'élément flexible (10) recouvrant le deuxième élément indéformable (4) au moins en sections.

10. Bras d'essuie-glace (20) selon la revendication 9, **caractérisé en ce que** la pièce de montage (1) est reliée au bras de tige (7) de manière à empêcher un déplacement de la pièce de montage (1) par rapport au bras de tige (7) dans la direction longitudinale du bras de tige (7).

11. Bras d'essuie-glace (20) selon la revendication 9 ou 10, **caractérisé en ce que** l'élément flexible (10) recouvre partiellement le bras de tige (7) et le support, notamment sur toute la longueur du bras de tige (7), et/ou sur toute la circonférence du bras de tige (7).

12. Bras d'essuie-glace (20) selon l'une des revendications 9 à 11, **caractérisé par** un porte-buse (21) avec une buse et un adaptateur de balai d'essuie-glace, qui est en communication fluidique avec le canal de fluide de la pièce de montage (1).

13. Essuie-glace (23) d'un véhicule avec un bras d'essuie-glace (20) selon l'une des revendications 9 à 12 et un balai d'essuie-glace (22).

14. Procédé de montage d'un canal de fluide pour le passage d'un fluide sur un bras de tige (7) d'un bras d'essuie-glace (20) d'un essuie-glace (23), **caractérisé en ce qu'**une pièce de montage (1) est fixée sur le bras de tige (7) selon l'une des revendications 1 à 8.

15. Système comprenant une première pièce de montage selon l'une des revendications 1 à 8 et une deuxième pièce de montage selon l'une des revendications 1 à 8, **caractérisé par** un moyen d'accouplement par lequel la première pièce de montage est reliée à la deuxième pièce de montage.
